# EUROPEAN PATENT SPECIFICATION

(11) **EP 1 998 058 B1**
(45) Date of publication and mention of the grant of the patent: **19.11.2014**
(21) Application number: 06725803.8
(22) Date of filing: 06.03.2006
(51) Int. Cl.: F16C 19/55, F16C 19/54, F16C 35/06, F16C 13/00

(54) **MODULAR BEARING UNIT**
MODULARE LAGEREINHEIT
GROUPE MODULAIRE DE ROULEMENT

(43) Date of publication of application: 03.12.2008
(73) Proprietor: Jiménez de Castro Fernández, José Luis, 45600 Talavera de la Reina Toledo (ES)
(72) Inventor: Jiménez de Castro Fernández, José Luis, 45600 Talavera de la Reina Toledo (ES)
(74) Representative: Gil-Vega, Victor
(86) International application number: PCT/ES2006/000105
(87) International publication number: WO 2007/101890

(56) References cited:
- WO-A1-2004/111478
- WO-A1-2004/111478
- DE-A1- 3 618 335
- DE-A1- 3 618 335
- US-A- 1 062 649
- US-A- 1 062 649
- US-A- 1 769 933
- US-A- 1 769 933
- US-A- 2 481 146
- US-A- 2 481 146
- US-A- 3 737 202

## Description

### OBJECT OF THE INVENTION

This invention refers to a modular bearing unit that makes it possible to establish any number of bearings operating within the unit, as desired, in accordance with the specific needs of each case. Its main purpose is to achieve a reducing effect of variable amplitude, in accordance with the number of bearings operating within the unit.

In addition, the purpose of this invention is to facilitate the coupling between the modules participating in the unit and the coupling of bearings to accessories in each specific case, such as gears, pulleys, etc.

### BACKGROUND OF THE INVENTION

As it is known, a bearing is composed of a shell bearing with two coaxial races between which a ball or roller crown is inserted. Ball or roller crown can rotate freely so that the corresponding element is fixed to the internal race, such as, for example, an axis, while the element that rotates on the axis, such as, for example, a gear, a crown, a plate, etc. is fixed to the external race.

When a bearing is used to carry out the transmission of movement with a multiplier or reduction effect, where the transmission ratio is very high, at least one of the bearings participating in the transmission is subject to high speeds, with a resulting and negative repercussion in the working life of the bearing.

Meanwhile, even though there are bearings or shell bearings in different sizes and with different performances as regards the loads they can support, in practice, there are many situations where it is needed or advisable to coaxially couple more than one shell bearing, in order to avoid overheating effects and improve transmissions, which entails a remarkable complexity in both structural and assembly terms, and which can have a negative effect in terms of costs and maintenance.

Document DE 3618335 A1 reveals a bearing arrangement for the purpose of holding a rotating shaft has at least two pairs of coaxial races, ball bearing elements being arranged between each pair of races. The bearing arrangement is characterized in that one race of one pair is connected to the other race of the other pair and rotates with it.

This arrangement implies a compulsory rotational axe for the movement to be transmitted to a transmission element.

Document US 1062649 A reveals a journal-bearing comprising one or more of the members of the bearing with extended portions located in proximity to the contiguous part and with only sufficient clearance to permit the formation of oil films between the extended portions and the contiguous parts with the purpose of prevent the displacement of parts. This bearing needs an axle to transmit the movement to a transmission element and internal bearings of the arrangement are not fitted one to each other, but are separate by means of an oil film in order to avoid frictional forces.

### DESCRIPTION OF THE INVENTION

The modular bearing unit described provides a fully satisfactory solution to the two issues mentioned as part of the abovementioned problems, so that the modular unit can produce a reduction effect within the core of the unit, between the first and last bearing operating in the unit, the speed differential being divided among all bearings and each rotating at a much lower speed. On the other hand, the different bearings may be fixed to each other so that they all rotate simultaneously and at the same speed, improving the mechanical resistance of the whole unit.

For such purposes and, more specifically in the unit that is recommended, the modular bearing unit comprises a plurality of shell bearings (with a variable number), each of which is axially extended in a cylindrical coupling neck to the immediately adjacent bearing, so that the external diameter of the neck corresponds to an internal diameter of the internal race of the adjacent bearing, to which it must be coupled and fixed.

There are two alternatives with this basic structure, either the cylindrical coupling neck joins the external race of a bearing, with a single-part character, where the first of the abovementioned effects shall be achieved, i.e., the reducing effect, or the cylindrical coupling neck joins the internal race of the bearing, where the bearing unit shall act as a single bearing with greater axial dimensions.

The cylindrical coupling neck is composed of an external thread to fix the element to the internal race of the adjacent bearing, screwed to fit. Likewise, the external race can be screwed to facilitate the assembly of any of the common accessories, such as gears, plates, crowns, etc. or it can be flat to couple these elements with pressure-fit systems.

Pursuant to the main objective of the invention, if the external race is joined to the axial neck in each bearing with a single-part character, when the axial neck is coupled to a second bearing, the interior race of the latter shall rotate simultaneously as the external race of the first bearing, thus achieving a substantial reduction effect, which is improved as the number of bearings participating in the modular unit increases. Therefore, any reduction effect degree can be achieved between the internal race corresponding to the first bearing and the external race of the last bearing.

### DESCRIPTION OF THE DRAWINGS

In order to provide additional information to the invention described herein and to better understand its features, a set of drawings is included as an integral part of the description, according to a preferred embodiment, with an illustrative and non-limitative character, representing the following:
Figure 1 is a schematic representation in perspective of a bearing that is part of the modular bearing unit, as described in the purpose of this invention.
Figure 2 is a diametrical section of the same bearing shown in the previous figure.
Figure 3 is a set of four bearings, as shown in Figure 1, duly coupled in a coaxial manner.
Figure 4 is an example of a practical embodiment wherein, on several inter-coupled bearings, there appear gear elements, with their corresponding driving chains.

### PREFERRED EMBODIMENT OF THE INVENTION

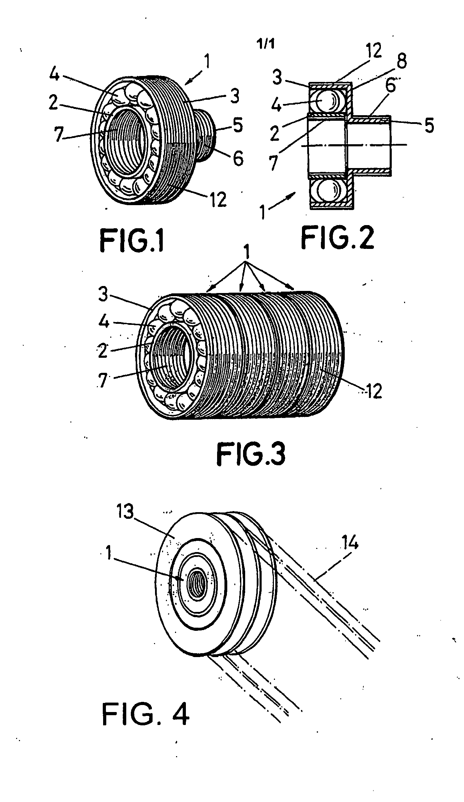

In view of the figures shown above, a plurality of bearings (as many as desired) is comprised in the modular bearing unit (1), each of which is composed of an internal (2) race and an external (3) race, between which a set of balls (4) facilitates the rotating movement of the races, but taking into account the special feature consisting in that the bearing (1) extends to a neck (5), equipped with an external thread (6) that is complementary of another thread (7) in an internal or smaller-diameter race (2) of the shell bearing, so that several bearings may be coupled coaxially through a neck (5), as shown on Figure 3.

The neck (5) may be joined with a single-element character to the race (2) with a smaller diameter, to obtain a bearing with a greater mechanical resistance in this type of coupling but, in accordance with the figures, said neck (5) shall be joined with a single-element character to the external race (3) through a ring-shaped flange (8), as shown in Figure 2, so that the said neck (5) shall act identically for the second bearing, as if it were onto the external roller (3) of the first bearing (and so on and so forth), achieving the above-referred multiplier or reduction effect, as desired, as taking into account that the external race (3) of each shell bearing makes up a single element with the neck (5) of said shell bearing, when the following shell bearing (1) is fixed to the said neck, the external race of the first shell bearing makes up a virtually single element with the internal race of the second shell bearing, through the neck (5) which joins them. In turn, the external race of the second bearing shall have a single-element character with the internal race of the third bearing (and so on and so forth), so that the greater the number of bearings participating in the modular unit, the higher the multiplier or reduction effect attained.

From the abovementioned structure we can deduce that a series of special shell bearings is comprised in the modular bearing unit, i.e., shell bearings that are manufactured with the aforesaid characteristics and which require a coaxial coupling system.

In any case, in accordance with another characteristic described in the invention, the external surface of the races (3) with the greatest diameter shall also include a thread (12) that facilitates the coupling of the shell bearings of the corresponding gears or crown gears (13) which shall transmit the movement to the second shaft (with the same or different characteristics) with chains (14), as shown in Figure 4.

## Claims

1. A modular bearing unit (1), comprising a plurality of bearings and shell bearings, wherein each shell bearing incorporates a main body, composed of coaxial races (2, 3) between which a ball or roller ring (4) is inserted and of a coaxial neck (5),
**characterised in that** the said coaxial node(s) axially extends from one of the said races (2, 3) with a single part character, and has an external diameter with a threaded surface (6) which matches a threaded surface (7) of an internal diameter of the interior cylindrical race of an adjacent bearing or shell bearing so that each shell bearing can be coupled and fixed coaxially to another bearing or shell bearing through said threaded surface (6) of said coaxial neck (5).

2. A modular bearing unit (1) according to claim 1, wherein the coaxial neck (5) joins an external race (3) of the shell bearing, linked to this bearing shell through a ring-shaped flange (8).

3. A modular bearing unit (1) according to claims 1 or 2, wherein the internal race (2) of each shell bearing and the external surface of the neck (5) coupling the shell bearings are threaded to fit.

4. A modular bearing unit (1) according to claim 1 or 2, wherein the coupling of each shell bearing neck (5) to the internal race of the adjacent shell bearing is achieved through complementary threads (6, 7).

5. A modular bearing unit (1) according to claim 1 or 2, wherein the external race (3) of each shell bearing includes an external threaded surface (12) for the coupling of gears, crowns, pulleys or similar transmission elements (13).

## Patentansprüche

1. Eine modulare Lagereinheit (1) mit einer Vielzahl von Lagern und Gehäuselagern, wo jedes Gehäuselager einen Hauptkörper hat, der sich aus koaxialen Laufringen (2, 3) zusammensetzt, zwischen denen ein Kugel- öder Rollenkranz (4) eingefügt ist, und aus einem koaxialen Kragen (5), **dadurch gekennzeichnet, dass** besagter koaxialer Kragen (5) sich axial ausgehend von einem der erwähnten Laufringe (2, 3) als Einzelteil erstreckt und einen Aussendurchmesser mit einer Gewindeoberfläche (6) aufweist, die auf die Gewindefläche (7) eines Innendurchmessers des inneren zylinderförmigen Laufringes eines anliegenden Lagers oder Gehäuselagers abgestimmt ist, so dass jedes Gehäuselager koaxial mit einem anderen Lager oder Gehäuselager zusammengefügt und daran koaxial mittels besagter Gewindefläche (6) des koacialen Kragens (5) befestigt werden kann.

2. Eine modulare Lagereinheit (1) gemäss Anspruch 1, bei der der koaxiale Kragen (5) mit einem äusseren Laufring (3) des Gehäuselagers verbunden und daran über einen ringförmigen Flansch befestigt ist.

3. Eine modulare Lagereinheit (1) gemäss Anspruch 1 oder 2, bei der der innere Laufring (2) eines jeden Gehäuselagers und die Aussenfläche des Kragens (5), der das Gehäuselager ankuppelt, ein Gewinde zur Zusammenfügung aufweist.

4. Eine modulare Lagereinheit (1) gemäss Anspruch 1 oder 2, bei der die Ankupplung eines jeden Kragens (5) des Gehäuselagers an den inneren Laufring des anliegenden Gehäuselagers durch zusätzliche Gewinde (6, 7) ermöglicht wird.

5. Eine modulare Lagereinheit (1) gemäss Anspruch 1 oder 2, bei der der äussere Laufring (3) eines jeden Gehäuselagers eine äussere Gewindefläche (12) aufweist für die Ankupplung von Getrieben, Kränzen, Riemenscheiben oder ähnlichen Übertragungselementen (13).

## Revendications

1. Un module de palier (1), comprenant plusieurs paliers et paliers à coussinet, où chaque palier à coussinet comprend un corps principal formé de bagues coaxiales (2, 3) entre lesquelles une couronne à bille ou à galet (4) est insérée, ainsi que d'un col coaxial (5), **caractérisé en ce que** ledit col coaxial (5) s'étend axialement à partir de l'une desdites bagues (2, 3) via un élément unique, et qu'il possède un diamètre extérieur avec une surface filetée (6) qui correspond à la surface filetée (7) du diamètre intérieur de la bague cylindrique intérieure d'un palier adjacent ou palier à coussinet, de manière à ce que chaque palier à coussinet puisse être accouplé et fixé de manière coaxiale à un autre palier ou palier à coussinet à travers ladite surface taraudée (6) du col coaxial (5).

2. Un module de palier (1) selon la revendication 1 où le col coaxial (5) rejoint une bague extérieure (3) du palier à coussinet, liée à ce palier à coussinet à travers une bride en forme d'anneau (8).

3. Un module de palier (1) selon les revendications 1 ou 2 où la bague intérieure (2) de chaque palier à coussinet et la surface extérieure du col (5) accouplée aux paliers à coussinet sont filetées.

4. Un module de coussinet (1) selon les revendications 1 ou 2 où l'accouplement de chaque col de palier à coussinet (5) à la bague intérieure du palier à coussinet adjacent est réalisé par des filetages complémentaires (6, 7).

5. Un module de palier (1) selon les revendications 1 ou 2 où la bague extérieure (3) de chaque palier à coussinet inclut une surface filetée extérieure (12) pour l'accouplement d'engrenages, couronnes, poulies ou éléments de transmission similaires (13).
